# EUROPÄISCHE PATENTSCHRIFT

(11) **EP 2 904 893 B1**
(45) Veröffentlichungstag und Bekanntmachung des Hinweises auf die Patenterteilung: **15.02.2017**
(21) Anmeldenummer: 15000284.8
(22) Anmeldetag: 30.01.2015
(51) Int. Cl.: A01G 3/053

(54) **Handwerkzeugmaschine, insbesondere eine Heckenschere**
Hand-held machine tool, in particular a hedge-shear
Machine-outil, notamment taille-haie

(30) Priorität: 07.02.2014 DE 102014001538
(43) Veröffentlichungstag der Anmeldung: 12.08.2015
(73) Patentinhaber: MOGATEC Moderne Gartentechnik GmbH, 09340 Drebach (DE)
(72) Erfinder: Vierig, Matthias, 09439 Arntsberg (DE)
(74) Vertreter: Patentanwälte Findeisen & Neumann

(56) Entgegenhaltungen:
- EP-A1- 2 266 389
- DE-A1- 4 421 746
- DE-B3-102004 009 486

## Beschreibung

Die Erfindung betrifft eine Handwerkzeugmaschine, insbesondere eine Heckenschere, welche im Wesentlichen aus einem nichtmetallischen Gehäuse für die Aufnahme eines Antriebsmotors und einem Getriebe mit einer Getriebewelle besteht, über das ein entlang einer Längsachse erstreckendes Werkzeug, insbesondere ein Schneidwerkzeug, vom Antriebsmotor antreibbar ist.

Aus der im Bedarfsfall zur Bedienungsanleitung der "Heckenschere "Procut" - HE 450 / 550 / 650" der MOGATEC Moderne Gartentechnik GmbH ausgereichten Explosionsdarstellung ist eine derartige Handwerkzeugmaschine in Form einer Heckenschere bekannt, bei der neben dem von im Kunststoffgehäuse fixierten und mit einem Antriebsritzel versehenen elektrischen Antriebsmotor auch eine, ein Stirnzahnrad und 180° zueinander versetzte Exzenterscheiben zum Antrieb des aus zwei gegenläufigen Schermessern bestehenden Schersystems tragende Getriebewelle, direkt im Kunststoffgehäuse gelagert sind. Insbesondere beim Schneiden in der Hecke wechseln sich bei Heckenscheren in der Lastcharakteristik ständig der Leerlauf mit Beinahe-Blockierung bis zur vollständigen Blockierung des Schersystems und damit des Getriebes der Heckenschere ab. Der Großteil dieser Kräfte und Momente wird von der Lagerung der Bauteile im Kunststoffgehäuse aufgenommen. Bei auftretenden Lastspitzen, speziell den resultierenden Verzahnungskräften, geben die Lagerungen im Kunststoffgehäuse elastisch zu weit nach bzw. weichen aus, wodurch die Verzahnungen des Getriebes außer Eingriff gelangen können und es zur vorzeitigen Zerstörung der Verzahnung kommen kann.

Sollen von der Handwerkzeugmaschine höhere Schnittkräfte unter Sicherung deren langzeitlicher Funktionsgarantie aufgebracht werden, so ist es allgemein bekannt, die Lagerung des Getriebes in Gehäusen aus Metall vorzunehmen. Dadurch erhöht sich jedoch das Gewicht der Handwerkzeugmaschine deutlich, was eine große, kräftemäßige Belastung der Bedienperson bedingt und auch die Handhabungsfreiheit beim Arbeitsvorgang deutlich einschränkt.

Weiterhin ist in der im Bedarfsfall zur Bedienungsanleitung der "Heckenschere HTN 45 / 55" der MOGATEC Moderne Gartentechnik GmbH ausgereichten Explosionsdarstellung eine Handwerkzeugmaschine in Gestalt einer Heckenschere mit einem Kunststoffgehäuse bekannt, bei der das Getriebe an einer kompakten Getriebeplatte aus Metall mit Abdeckhaube gelagert und im Kunststoffgehäuse aufgenommen ist. Dadurch lässt sich das Gewicht zwar geringfügig reduzieren, wobei jedoch der von der Bedienperson aufzubringende Krafteinsatz weiterhin erheblich und auch die für den Arbeitsvorgang wünschenswerte Handhabungsfreiheit der Handwerkzeugmaschine ebenfalls noch weitgehenden Einschränkungen unterliegt.

Aus der DE-B-102004009486 ist eine Handwerkzeugmaschine bekannt.

Die Aufgabe der Erfindung besteht darin, eine Lösung für eine Handwerkzeugmaschine vorzuschlagen, mit der das Getriebe auch beim Auftreten von Lastspitzen wirksam lagegesichert im nichtmetallischen Gehäuse der Handwerkzeugmaschine gehalten werden kann, und dabei dennoch das Gewicht der Handwerkzeugmaschine deutlich reduziert sowie deren Handhabungsfreiheit beim Arbeitsvorgang erhöht werden können.

Diese Aufgabe wird bei einer gattungsgemäßen Handwerkzeugmaschine mit den im Kennzeichen des Patentanspruchs 1 angegebenen Merkmalen gelöst, wobei deren vorteilhaften Ausgestaltungen aus den Patentansprüchen 2 bis 7 ersichtlich sind.

Die Vorteile der Erfindung bestehen darin, dass beim Arbeiten mit der Handwerkzeugmaschine auch bei den dabei auftretenden Lastspitzen, das Antriebsritzel (z.B. in Form einer verzahnten Motorwelle) und das Stirnzahnrad vom Stützrahmen sicher im Eingriff gehalten werden. Gleichzeitig kann durch die Ausgestaltung des Stützrahmens das Gewicht der Handwerkzeugmaschine wesentlich reduziert und damit die kräftemäßige Belastung des Bedienenden erheblich verringert und damit auch die Handhabungsfreiheit beim Arbeitsvorgang erhöht werden.

Die Erfindung soll nachfolgend an einem Ausführungsbeispiel und zugehörigen Zeichnungen näher erläutert werden.

Es zeigen:
- Fig. 1: eine perspektivische Ansicht der erfindungsgemäßen, als Heckenschere ausgebildeten Handwerkzeugmaschine
- Fig. 2: eine vereinfachte Seitenansicht der erfindungsgemäßen Handwerkzeugmaschine, wobei zur Darstellung des Getriebes, die Gehäusehalbschale 2² abgenommen worden ist
- Fig. 3: eine perspektivische Ansicht des Stützrahmens
- Fig. 4: eine Seitenansicht des Getriebebereichs der erfindungsgemäßen, als Heckenschere ausgebildeten Handwerkzeugmaschine
- Fig. 5: eine Schnittdarstellung entlang der Linie X-X der Fig. 4
- Fig. 6: eine perspektivische Ansicht der erfindungsgemäßen, als Heckenschere ausgebildeten Handwerkzeugmaschine, bei der zur deutlicheren Darstellung des Stützrahmens, die Exzenterscheiben und Scherblätter nicht wiedergegeben sind
- Fig. 7: eine perspektivische Ansicht der Gehäusehalbschale 2² der erfindungsgemäßen Handwerkzeugmaschine mit eingelegtem Stützrahmen 19, jedoch ohne die beispielsweise in der Fig. 2 gezeigten Einbauteile
- Fig. 8: eine Schnittdarstellung durch den Stützrahmen 19 entlang der Linie Y-Y der Fig. 4, wobei die Gehäusehälfte 2² integriert ist

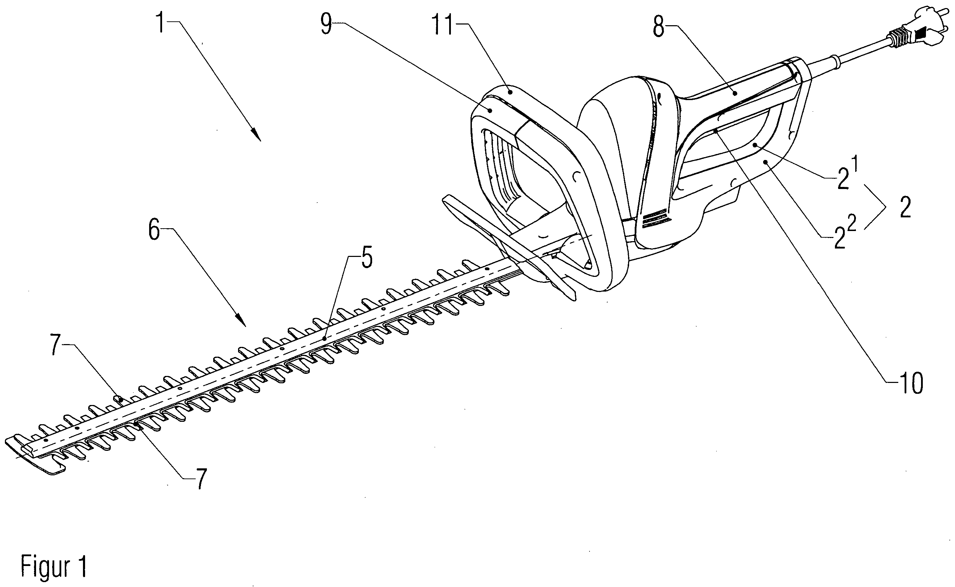

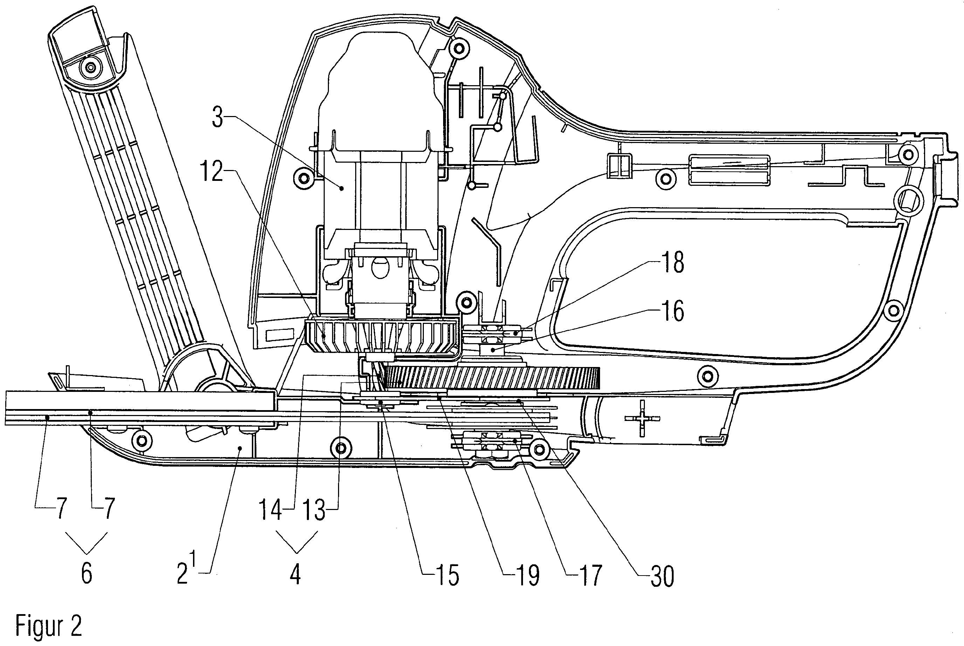

In den Fig. 1 und 2 ist eine Handwerkzeugmaschine 1 in Gestalt einer, aus Arbeitschutzgründen in so genannter Zweihandsicherheitsbedienung zu betreibenden Heckenschere dargestellt. Diese besteht aus einem nichtmetallischen Gehäuse 2, vorzugsweise aus Kunststoff, welches von zwei Gehäusehalbschalen 2¹, 2² gebildet wird. Vom Gehäuse 2 wird ein elektrischer Antriebsmotor 3 aufgenommen, von dem über ein Getriebe 4 ein sich entlang einer Längsachse 5 erstreckendes Werkzeug 6, insbesondere ein Schneidwerkzeug mit Schermessern 7, gegenläufig antreibbar ist. Außerdem ist das Gehäuse 2 mit wenigstens zwei unabhängig voneinander vorgesehenen und beabstandet zueinander angeordneten, Handgriffen, dem hinteren Handgriff 8 und dem vorderen Handgriff 9, versehen. In beiden Handgriffen 8, 9 ist ein Schaltelement 10, 11 integriert.

Gemäß der Fig. 2 ist der ein Lüfterrad 12 aufweisende elektrische Antriebsmotor 3 zwischen den Gehäusehalbschalen 2¹, 2² fixiert. Der aus dem Antriebsmotor 3 herausragende Teil der Motorwelle ist zumindest im Bereich eines zugeordneten Stirnzahnrades 13 als verzahnte Motorwelle 14 und damit als Antriebsritzel für das Stirnzahnrad 13 ausgestaltet. Das freie Ende der Motorwelle 14 ist außerdem in einem vorzugsweise als Kugellager ausgebildeten und im Gehäuse 2 angeordneten Lager 15 abgestützt.

Dabei ist das Stirnzahnrad 13 mit einer Getriebewelle 16 drehfest verbunden, die mittels zweier im Gehäuse 2 fixierten und Kugellager beinhaltenden Lageraufnahmen 17, 18 drehbeweglich gelagert wird. Weiterhin sind an der Getriebewelle 16 zwei 180° zueinander versetzte Exzenterscheiben fixiert, die in ein jeweils zugeordnetes, an den gehäuseseitigen Enden der beiden Schermesser 7 des Werkzeugs 6 vorgesehenes Auge eingreifend ausgebildet sind (nicht dargestellt). Durch die von der verzahnten Motorwelle 14 und dem Stirnzahnrad 13 realisierte Getriebestufe wird beim Betreiben der Handwerkzeugmaschine 1 eine Drehzahlreduzierung vollzogen, während die beiden 180° versetzten Exzenterscheiben in Verbindung mit den Augen der Schermesser 7 die Drehbewegung der Getriebewelle 16 in eine translatorische und gegenläufige Bewegung der Schermesser 7 des Werkzeugs 6 umwandeln.

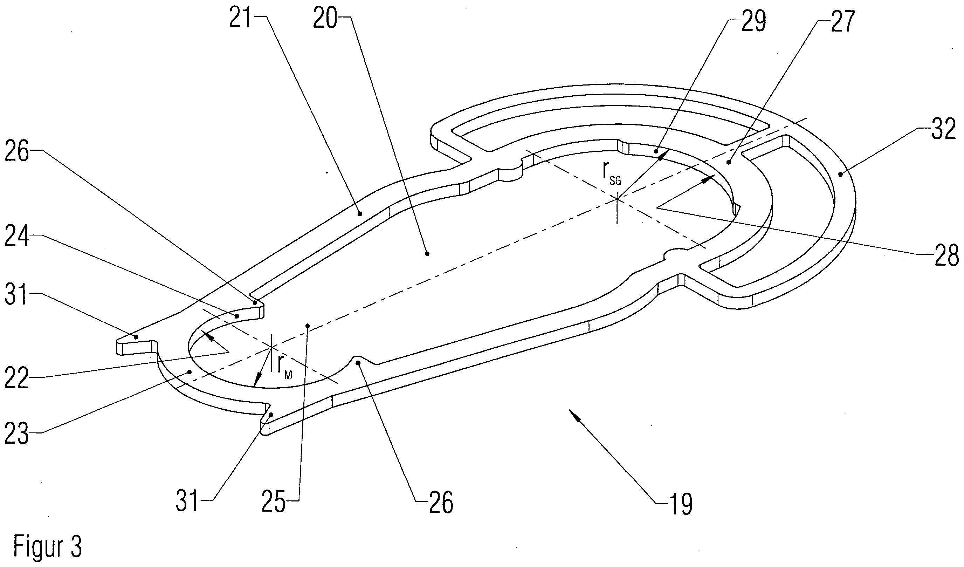

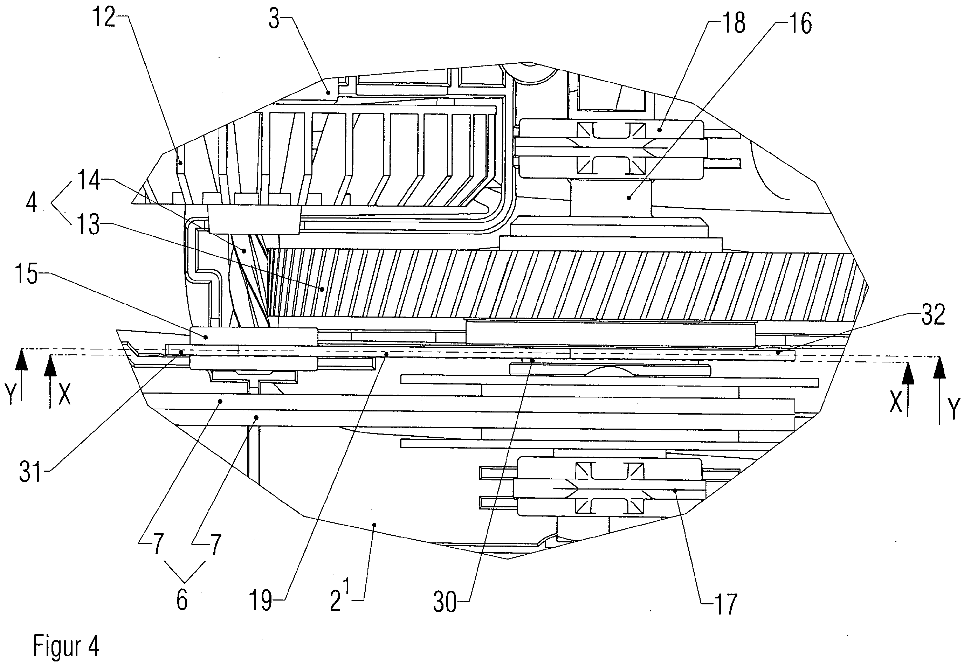

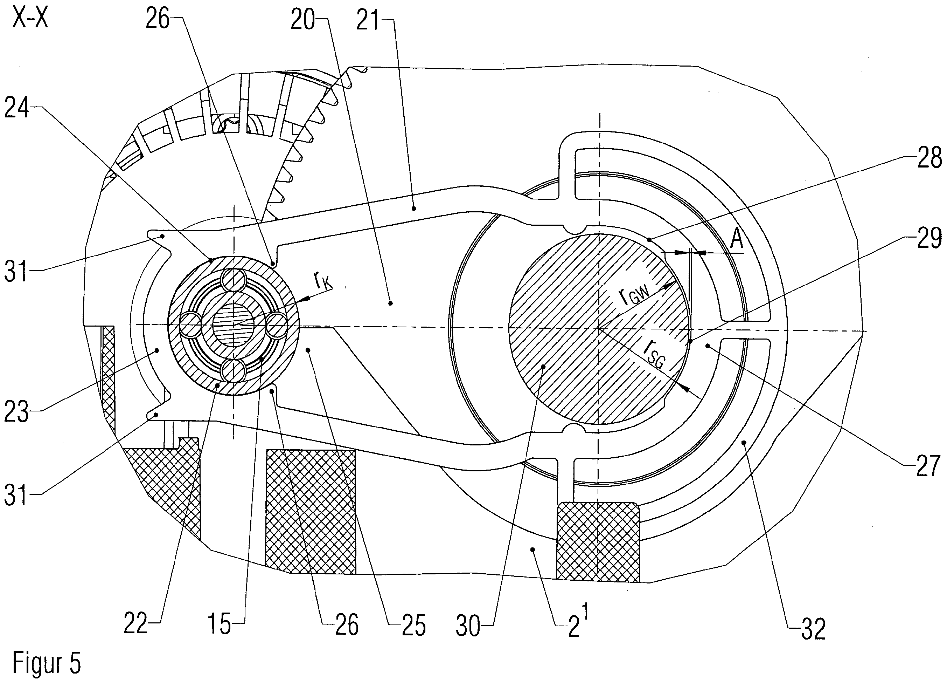

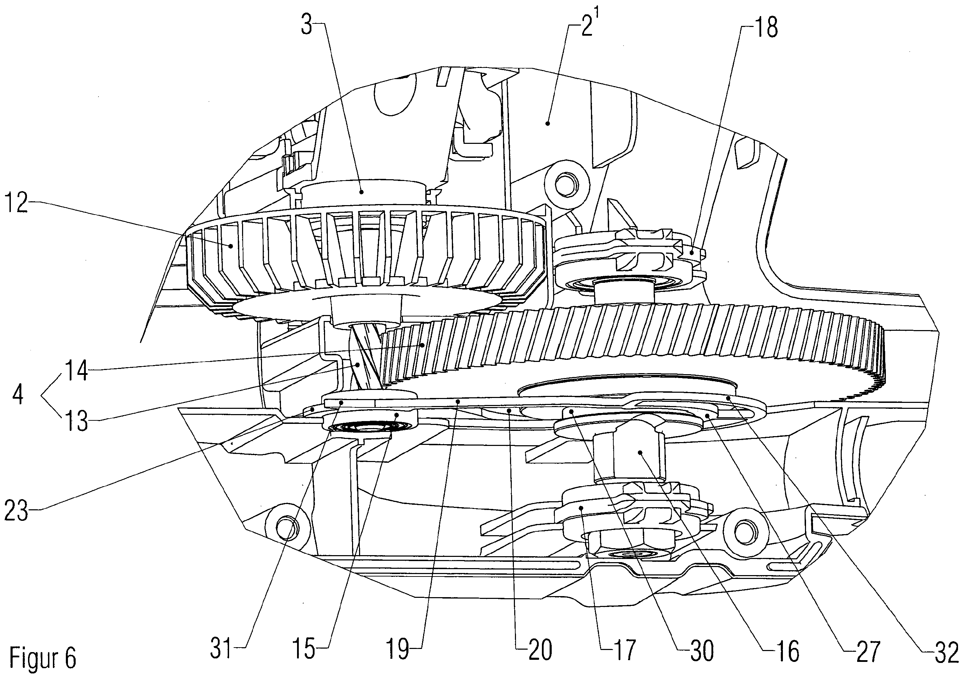

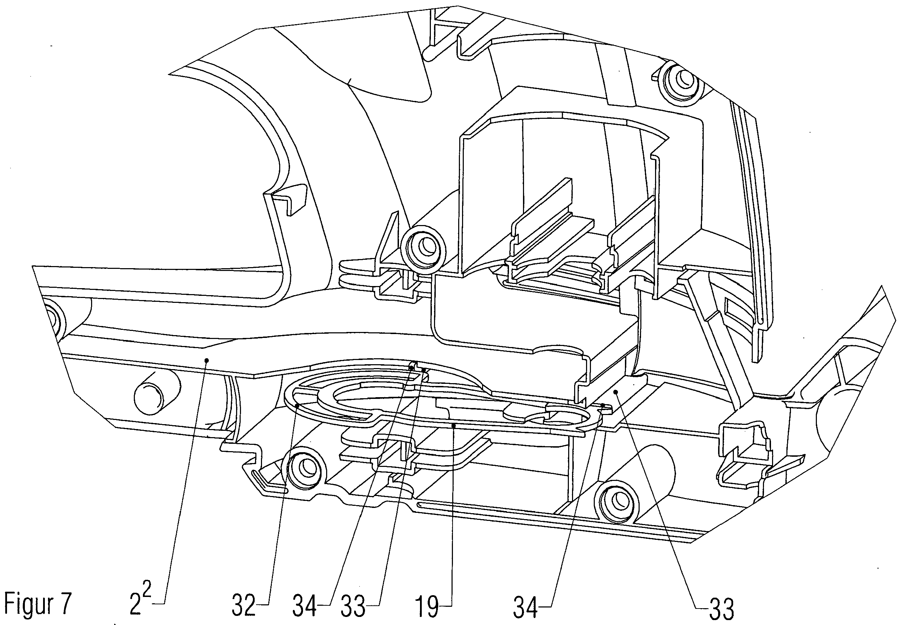

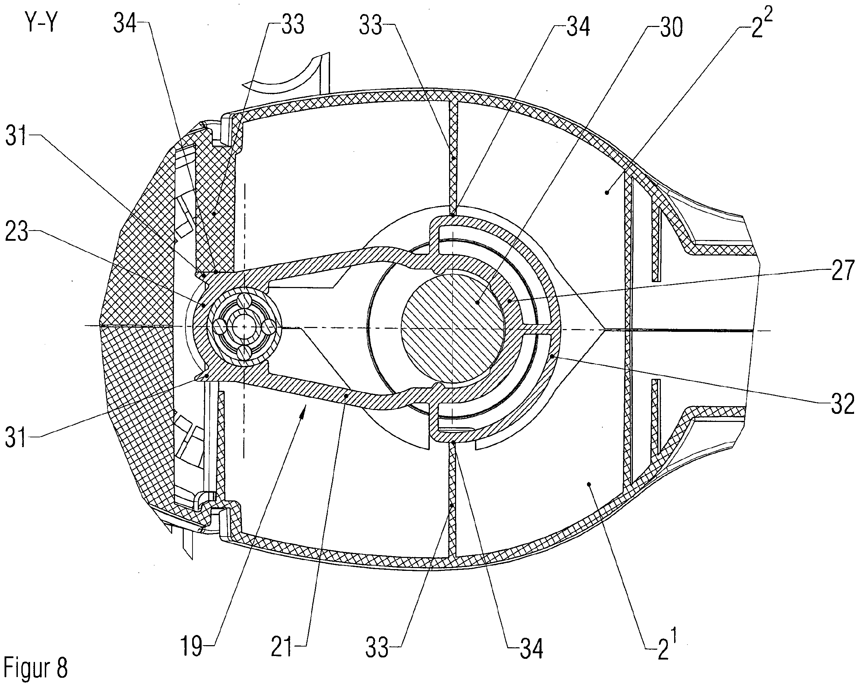

Um im Gehäuse 2 beim Betrieb der Handwerkzeugmaschine 1 ein elastischen Ausweichen von Antriebsmotor 3 und Getriebewelle 16 und damit insbesondere der verzahnten Motorwelle 14 mit dem Stirnzahnrad 13 durch die dort auftretenden Verzahnungskräfte wirksam zu verhindern, ist ein vorzugsweise aus Metall, insbesondere Stahl, ausgebildeter Stützrahmen 19 vorgesehen, der vorteilhaft ein Flachteil darstellt. Dieser aus der Fig. 3 ersichtliche Stützrahmen 19 besteht aus einem, eine innere Aussparung 20 rahmenförmig umschließenden und damit geschlossenen Steg 21, welcher an der Innenseite 22 seines antriebsmotorseitigen Endes 23 eine zylindrische Fläche 24 aufweist, deren Radius r_{M} dem Radius r_{K} (Fig. 5) des Außenringes des Kugellagers des Lagers 15 für die Abstützung des freien Endes der verzahnten Motorwelle 14 entspricht. Dadurch, dass diese zylindrische Fläche 24 eine offene Seite 25 aufweist, die zwei den Radius r_{M} fortsetzende Vorsprünge 26 beinhaltet, kann deren lagegesicherte und formschlüssige Aufnahme auf dem Außenring des Kugellagers des Lagers 15 erfolgen. An seinem der Getriebewelle 16 zugewandten Ende 27 ist der Stützrahmen 19 im Bereich seiner der v.g. zylindrischen Fläche 24 gegenüberliegenden Innenseite 28 mit einer segmentartigen zylindrischen Fläche 29 versehen, deren Radius r_{SG} im Wesentlichen dem Radius r_{GW} eines an der Getriebewelle 16 vorgesehenen Stütz- und Gleitzylinders 30 entspricht (Fig. 4 bis 6). Dabei ist der Stützrahmen 19 in Bezug auf den Stütz- und Gleitzylinder 30 so angeordnet, dass die zylindrische Fläche 29 des Stützrahmens 19 zum Stütz- und Gleitzylinder 30 zunächst in einem Abstand A angeordnet ist und damit die beiden Bauteile keinen Flächenkontakt aufweisen.
Soweit der Stützrahmen 19 am antriebsmotorseitigen Ende 23 beiderseits mit Nasen 31 versehen und am anderen Ende 27 eine kreissegmentförmige Erweiterung 32 angeordnet sind, dienen diese gemäß den Fig. 7 und 8 dazu, dass in Verbindung mit quer in den Gehäusehalbschalen 2¹, 2² verlaufenden Wänden 33 und dazwischen befindlichen Auflageflächen 34 eine zusätzliche Abstützung bzw. Fixierung des Stützrahmens 19 erfolgen kann.

Sollten sich bei der Arbeit mit der erfindungsgemäßen Handwerkzeugmaschine 1, insbesondere einer Heckenschere, ein erhöhter Leistungsbedarf und damit entstehende Lastspitzen einstellen, so werden diese zunächst vom Gehäuse 2 aus Kunststoff aufgenommen, indem dieses eine elastische Verformung vollzieht. Diese wird vorstehend aber nur soweit zugelassen, bis die am getriebewellenseitigen Ende 27 des Stützrahmens 19 an der Innenseite 28 vorgesehene und segmentartig zylindrisch ausgestaltete und zunächst noch einen Abstand A zu dem an der Getriebewelle 16 vorgesehenen Stütz- und Gleitzylinders 30 aufweisende Fläche 29 am Stütz- und Gleitzylinders 30 anschlägt und mit diesem kurzzeitig in Gleitreibung gelangt. Damit wird der Eingriff von verzahnter Motorwelle 14 und Stirnzahnrad 13 gesichert, bis die Lastspitze abgeflacht ist. Danach federt das Gehäuse 2 in seine Ausgangslage zurück, wodurch auch der Flächenkontakt der segmentartigen, zylindrischen Fläche 29 an der Innenseite 28 des Stützrahmens 19 mit dem Stütz- und Gleitzylinder 30 aufgehoben sowie der ursprüngliche Abstand A zwischen diesen beiden Bauteilen wieder hergestellt wird. Damit kann eine ansonsten, aus der dauernden Abstützung des Stützrahmens 19 und der damit verbundenen Gleitreibung, resultierende thermische Belastung wirksam unterbunden werden. Dadurch werden außerdem die Voraussetzungen dafür geschaffen, dass beim Auftreten erneuter Lastspitzen sich die beschriebene Verfahrensweise erneut vollziehen kann.

### Aufstellung der verwendeten Bezugszeichen

- 1: Handwerkzeugmaschine
- 2: nichtmetallisches Gehäuse
- 2¹: Gehäusehalbschale
- 2²: Gehäusehalbschale
- 3: Antriebsmotor
- 4: Getriebe
- 5: Längsachse
- 6: Werkzeug
- 7: Schermesser
- 8: hinterer Handgriff
- 9: vorderer Handgriff
- 10: Schaltelement
- 11: Schaltelement
- 12: Lüfterrad
- 13: Stirnzahnrad
- 14: verzahnte Motorwelle
- 15: Lager
- 16: Getriebewelle
- 17: Lageraufnahme
- 18: Lageraufnahme
- 19: Stützrahmen
- 20: innere Aussparung von 19
- 21: Steg von 19
- 22: Innenseite
- 23: antriebsmotorseitiges Ende
- 24: zylindrische Fläche
- 25: offene Seite von 24
- 26: Vorsprung an 24
- 27: getriebewellenseitiges Ende von 19
- 28: Innenseite
- 29: segmentartige, zylindrische Fläche
- 30: Stütz- und Gleitzylinder
- 31: Nasen an 23 von 19
- 32: kreissegmentförmige Erweiterung
- 33: Wand in 2¹, 2²
- 34: Auflagefläche in 2¹, 2²
- A: Abstand
- r_{M}: Radius an 23 / 22 von 19
- r_{K}: Radius des Außenringes des Lagers 15
- r_{SG}: Radius an 29
- r_{GW}: Radius von 30

## Patentansprüche

1. Handwerkzeugmaschine, insbesondere eine Heckenschere, welche im Wesentlichen aus einem nichtmetallischen Gehäuse für die Aufnahme eines Antriebsmotors und einem Getriebe mit einer Getriebewelle besteht, über das ein entlang einer Längsachse erstreckendes Werkzeug, insbesondere ein Schneidwerkzeug, vom Antriebsmotor antreibbar ist,
wobei das Getriebe (2) aus einem Antriebsritzel besteht, welches mit einem Stirnzahnrad (13) kämmt, wobei der aus dem Antriebsmotor (3) herausragende Teil einer Motorwelle (14) zumindest im Bereich des zugeordneten Stirnzahnrades (13) als Antriebsritzel in Form einer verzahnten Motorwelle (14) ausgebildet **dadurch gekennzeichnet, dass** deren freies Ende in einem als Kugellager ausgestalteten sowie im Gehäuse (2) angeordneten Lager (15) abgestützt ist, und dabei mit der Getriebewelle (16) ein Stütz- und Gleitzylinder (30) drehfest verbunden ist, wobei weiterhin ein Stützrahmen (19) im Gehäuse (2) gelagert ist, der sowohl das Lager (15) als auch den Stütz- und Gleitzylinder (30) überspannend angeordnet ist.

2. Handwerkzeugmaschine nach Anspruch 1,
**dadurch gekennzeichnet,**
**dass** der Stützrahmen (19) aus einem, eine innere Aussparung (20) rahmenförmig umschließenden und damit geschlossenen Steg (21) besteht, welcher an der Innenseite (22) seines antriebsmotorseitigen Endes (23) eine zylindrische Fläche (24) aufweist, deren Radius (r_{M}) dem Radius (r_{K}) des Außenringes des Kugellagers des Lagers (15) für die Abstützung des freien Endes der verzahnten Motorwelle (14) entspricht, an seinem der Getriebewelle (16) zugewandten Ende (27) ist der Stützrahmen (19) im Bereich seiner der zylindrischen Fläche (24) gegenüberliegenden Innenseite (28) mit einer segmentartigen zylindrischen Fläche (29) versehen, deren Radius (r_{SG}) im Wesentlichen dem Radius (r_{GW}) des an der Getriebewelle (16) vorgesehenen Stütz- und Gleitzylinders (30) entspricht, wobei der Stützrahmen (19) in Bezug auf den Stütz- und Gleitzylinder (30) so angeordnet, dass die zylindrische Fläche (29) des Stützrahmens (19) zum Stütz- und Gleitzylinder (30) in einem Abstand (A) angeordnet ist und damit die beiden Bauteile keinen Flächenkontakt aufweisen.

3. Handwerkzeugmaschine nach Anspruch 2,
**dadurch gekennzeichnet,**
**dass** die zylindrische Fläche (24) eine offene Seite (25) aufweist, die zwei den Radius (r_{M}) fortsetzende Vorsprünge (26) beinhaltet.

4. Handwerkzeugmaschine nach Anspruch 2,
**dadurch gekennzeichnet,**
**dass** der Stützrahmen (19) am antriebsmotorseitigen Ende (23) beiderseits mit Nasen (31) versehen und am anderen Ende (27) eine kreissegmentförmige Erweiterung (32) angeordnet ist.

5. Handwerkzeugmaschine nach Anspruch 2,
**dadurch gekennzeichnet,**
**dass** der Stützrahmen (19) aus Metall, insbesondere Stahl, besteht.

6. Handwerkzeugmaschine nach Anspruch 2,
**dadurch gekennzeichnet,**
**dass** der Stützrahmen (19) als ein Flachteil ausgestaltet ist.

7. Handwerkzeugmaschine nach Anspruch 1,
**dadurch gekennzeichnet,**
**dass** die das Gehäuse (2) bildenden Gehäusehalbschalen (2¹, 2²), mit quer verlaufenden Wänden (33) und dazwischen befindlichen Auflageflächen (34) zur zusätzlichen Abstützung des Stützrahmens (19) ausgestattet sind.

## Claims

1. A hand-held machine tool, particularly a hedge shear, which substantially consists of a non-metallic housing for accommodating a drive motor and a transmission with a transmission shaft, via which a tool extending along a longitudinal axis, particularly a cutting tool, can be driven by said drive motor, wherein said transmission (2) consists of a drive pinion, which engages with a spur gearwheel (13), wherein the portion of a motor shaft (14) that projects from the drive motor (3) is at least in the region of the associated spur gear wheel (13) configured as a drive pinion in the form of a toothed motor shaft (14), **characterized in that** its free end is supported in a bearing (15) designed as a ball bearing and disposed in the housing (2), and a support and slide cylinder (30) is non-rotatably connected to the transmission shaft (16), wherein additionally a support frame (19) is supported in the housing (2) which is arranged so as to span both the bearing (15) and the support and slide cylinder (30).

2. The hand-held machine tool according to claim 1, **characterized in that** the support frame (19) consists of a flange (21) that surrounds an inner recess (20) like a frame and is thus closed, which support frame comprises on the inner side (22) of its drive motor side end (23) a cylindrical surface (24) whose radius (r_{M}) corresponds to the radius (r_{K}) of the outer ring of the bearing (15) for supporting the free end of the toothed motor shaft (14); on its end (27) facing the transmission shaft (16), the support frame (19) includes on its inner side (28) located opposite the cylindrical surface (24) a segment-like cylindrical surface (29), whose radius (r_{SG}) substantially corresponds to the radius (r_{GW}) of the support and slide cylinder (30) provided on the transmission shaft (16), wherein said support frame (19) is arranged in relation to the support and slide cylinder (30) such that the cylindrical surface (29) of the support frame (19) is arranged at a spacing (A) from the support and slide cylinder (30) and these two components therefore are not in surface contact with one another.

3. The hand-held machine tool according to claim 2, **characterized in that** the cylindrical surface (24) has an open side (25) which includes two projections (26) that continue the radius (r_{M}).

4. The hand-held machine tool according to claim 2, **characterized in that** noses (31) are provided on both sides of the drive motor side end (23) of the support frame (19), while a circular-segmental extension (32) is disposed on the other end (27).

5. The hand-held machine tool according to claim 2, **characterized in that** the support frame (19) consists of metal, particularly steel.

6. The hand-held machine tool according to claim 2, **characterized in that** the support frame (19) is configured as a flat part.

7. The hand-held machine tool according to claim 1, **characterized in that** the housing half shells (2¹, 2²) that form the housing (2) have transverse walls (33) and support surfaces (34) located in between for additional support of the support frame (19).

## Revendications

1. Machine-outil, notamment un taille-haie, qui se compose essentiellement d'un boîtier non métallique destiné à recevoir un moteur d'entraînement, et d'un mécanisme d'actionnement avec un arbre de transmission, où ce mécanisme d'actionnement permet d'entraîner, à l'aide du moteur d'entraînement, un outil qui s'étend le long d'un axe longitudinal et qui est notamment un outil de coupe, où la transmission (2) consiste en un pignon d'entraînement qui interagit avec une roue dentée (13), où la partie saillante du moteur d'entraînement (3) d'un arbre moteur (14) est conçue, au moins au niveau de la roue dentée associée (13), en tant que pignon d'entraînement et sous forme d'un arbre moteur denté (14), **caractérisée en ce que** le bout libre de ce dernier est appuyé dans un palier (15) conçu en tant que roulement à billes et disposé dans le boîtier (2), qu'un cylindre d'appui et de glissement (30) est relié de façon non-rotative à l'arbre de transmission (16), et qu'un cadre d'appui (19) est logé dans le boîtier (2), ce cadre de support étant disposé de sorte qu'il enjambe tant le palier (15) que le cylindre d'appui et de glissement (30).

2. Machine-outil suivant la revendication 1, **caractérisée en ce que** le cadre d'appui (19) consiste en un méplat (21) qui encercle, sous forme d'un cadre, un évidement intérieur (20), ce qui fait que le méplat est fermé. Ce méplat présente, à l'intérieur (22) du bout de son moteur d'entraînement (23), une surface cylindrique (24) dont le rayon (r_{M}) correspond au rayon (r_{K}) de la bague extérieure du roulement à billes du palier (15) qui, lui, sert à appuyer le bout libre de l'arbre moteur denté (14), que sur le bout (27) montrant vers l'arbre de transmission (16), le cadre d'appui (19) est muni, au niveau de sa surface intérieure (28) opposée à la surface cylindrique (24), d'une surface cylindrique conçue de façon segmentée (29) dont le rayon (r_{SG}) correspond essentiellement au rayon (r_{GW}) du cylindre d'appui et de glissement (30) monté sur l'arbre de transmission (16), le cadre d'appui (19) étant disposé, par rapport au cylindre d'appui et de glissement (30), de sorte que la surface cylindrique (29) du cadre d'appui (19) est placée à une distance (A) du cylindre d'appui et de glissement (30), ce qui assure que ces deux pièces n'aient pas de contact superficiel.

3. Machine-outil suivant la revendication 2, **caractérisée en ce que** la surface cylindrique (24) présente un côté ouvert (25) qui comprend deux saillies continues (26) encerclant le rayon (r_{M}).

4. Machine-outil suivant la revendication 2, **caractérisée en ce que** le cadre d'appui (19) monté au bout du moteur d'entraînement (23) est doté des deux côtés de nervures (31) et que l'autre bout (27) est muni d'une extension (32) ayant la forme d'un segment de cercle.

5. Machine-outil suivant la revendication 2, **caractérisée en ce que** le cadre d'appui (19) est en métal, notamment en acier.

6. Machine-outil suivant la revendication 2, **caractérisée en ce que** le cadre d'appui (19) est conçu en tant que pièce plate.

7. Machine-outil suivant la revendication 1, **caractérisée en ce que** les demi-coquilles (2¹, 2²) composant le boîtier (2) sont dotées de parois (33) transversalement disposées et de surfaces portantes (34) situées entre les parois qui servent de support supplémentaire au cadre d'appui (19).
